# DEMANDE DE BREVET EUROPEEN

(11) **EP 4 656 967 A1**
(43) Date de publication de la demande: **03.12.2025**
(21) Numéro de dépôt: 25177404.8
(22) Date de dépôt: 19.05.2025
(51) Int. Cl.: F24H 1/18, F16L 59/00, F17C 1/12

(54) **ENVELOPPE THERMIQUEMENT ISOLANTE POUR RÉSERVOIR ET DISPOSITIF DE RÉSERVOIR COMPRENANT UNE TELLE ENVELOPPE**

(30) Priorité: 28.05.2024 FR 2405469
(71) Demandeur: Viessmann Climate Solutions SE, 35108 Allendorf (Eder) (DE)
(72) Inventeur: SCHILLER, Manuel, 57385 TRITTELING REDLACH (FR); FIACRE, Jean-Jacques, 57510 GRUNDVILLER (FR); MANGIN, Arnaud, 57530 COURCELLES-CHAUSSY (FR)
(74) Mandataire: Ipsilon

(57) **Abrégé**

L'invention concerne une enveloppe isolante (1) pour réservoir (2) au moins deux parties de paroi latérales (3) complémentaires, assemblées entre elles par aboutement de leurs bords latéraux (31, 32) opposés pour former ensemble un corps cylindrique creux, les différentes parties (3) précitées constituant ensemble une coque isolante, avec les bords d'assemblage (31, 32) latéraux des parties de paroi latérales (3) s'étendant selon la direction longitudinale (DL) du corps cylindrique.

Enveloppe (1) caractérisée en ce que chaque partie de paroi latérale (3) présente une structure composite avec un corps principal en un matériau et pourvu d'au moins une cavité ou zone renfoncée au niveau de sa face intérieure (35), et en ce qu'au moins un panneau isolant sous vide, s'étendant sur une portion de la surface de la partie de paroi latérale (3) concernée, est disposé dans ladite au moins une cavité, ladite enveloppe isolante (1) comprenant également au moins une couche (7) de matériau compressible située au moins entre les corps principaux (34) des parties de paroi latérale (3) et le réservoir (2).

## Description

La présente invention concerne le domaine des réservoirs de stockage de liquide présentant une isolation thermique extérieure, rapportée et formée par assemblage de plusieurs parties.

Elle a pour objet une enveloppe thermiquement isolante pour de tels réservoirs et un dispositif de réservoir comprenant une telle enveloppe.

De nombreuses réalisations d'enveloppe isolante en plusieurs parties pour réservoir, notamment pour réservoir de stockage d'eau, sont déjà connues.

Ces enveloppes comprennent généralement au moins deux parties de paroi latérales complémentaires, assemblées entre elles par aboutement de leurs bords latéraux opposés pour former ensemble un corps cylindrique creux, à section ronde, carrée ou autre (les bords d'assemblage latéraux des parties de paroi latérales s'étendent selon la direction longitudinale du corps cylindrique profilé). Elles comprennent aussi éventuellement deux corps en forme de plaques obturant les deux ouvertures opposées supérieure et inférieure dudit corps cylindrique. Ces différents éléments constituent ensemble, par assemblage mutuel, une coque isolante qui est soit ouverte ou seulement partiellement fermée (en l'absence de l'une ou des deux plaques de fermeture supérieure et inférieure), soit fermée (lorsque les deux plaques de fermeture sont présentes), et qui est destinée à entourer et enfermer ledit réservoir.

Toutefois, ces enveloppes ou coques isolantes connues, ainsi que les dispositifs de réservoir qui les comprennent, présentent plusieurs limitations et insuffisances et il existe une demande pour des solutions permettant de les pallier.

Ainsi, il a été notamment relevé que ces enveloppes ou coques isolantes connues ne fournissent pas une isolation thermique suffisante par rapport aux attentes et aux nouvelles règlementations (du fait de leur constitution, de l'assemblage de leurs éléments constitutifs et de leur enveloppement lâche du réservoir autorisant une circulation d'air par convexion), ne s'intègrent pas dans une démarche d'écoconception ou de recyclage, ne permettent pas une flexibilité au niveau aspect extérieur et ne fournissent pas une coque suffisamment rigide et robuste.

De plus, elles sont souvent fastidieuses à monter et à démonter (lorsque le démontage est possible) et ne facilitent pas suffisamment la maintenance.

La présente invention a pour but de répondre au moins partiellement aux demandes exposées ci-dessus et de pallier au moins certaines des limitations et insuffisances évoquées.

A cet effet, l'invention a pour objet une enveloppe isolante en plusieurs parties pour réservoir, notamment pour réservoir de stockage d'eau, comprenant au moins deux parties de paroi latérales complémentaires, assemblées entre elles par aboutement de leurs bords latéraux opposés pour former ensemble un corps cylindrique creux, à section ronde ou non, et, éventuellement au moins un corps en forme de plaque obturant l'une ou chacune des deux ouvertures opposées supérieure et inférieure dudit corps cylindrique, les différentes parties précitées constituant ensemble une coque isolante, éventuellement fermée par au moins l'un des deux corps, destinée à entourer et enfermer ledit réservoir, avec les bords d'assemblage latéraux des parties de paroi latérales s'étendant selon la direction longitudinale du corps cylindrique,
enveloppe isolante caractérisée en ce que chaque partie de paroi latérale présente une structure composite avec un corps principal en un matériau moussé ou alvéolaire rigide et pourvu d'au moins une cavité ou zone renfoncée au niveau de la face intérieure de la partie de paroi latérale tournée vers le réservoir, et en ce qu'au moins un panneau isolant sous vide, s'étendant sur une portion de la surface de la partie de paroi latérale concernée, est disposé dans ladite au moins une cavité ou zone renfoncée, préférentiellement de manière ajustée, ladite enveloppe isolante comprenant également au moins une couche de matériau compressible arrangée pour être située au moins entre les corps principaux des parties de paroi latérale et le réservoir.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'un dispositif de réservoir isolé comprenant une enveloppe isolante sous forme de coque selon un mode de réalisation de l'invention ;
[Fig. 2] est une vue éclatée du dispositif de réservoir représenté figure 1 ;
[Fig. 3] est une vue en coupe verticale selon A-A et en élévation du dispositif de réservoir de la figure 1 ;
[Fig. 4] est une vue similaire à celle de la figure 1, une partie de paroi latérale de la coque isolante étant enlevée ;
[Fig. 5] est une vue du dispositif de réservoir similaire à celle de la figure 1, des portions supérieures de deux parties de paroi latérales étant enlevées ;
[Fig. 6] est une vue en élévation d'une partie de paroi latérale faisant partie de l'enveloppe isolante du dispositif de réservoir représenté figures 1, 2 et 4 ;
[Fig. 7] est une vue en coupe selon B-B de la partie de paroi latérale représentée figure 6 ;
[Fig. 8A] et [Fig. 8B] sont des vues en coupe selon C-C de la partie de paroi latérale représentée figure 6, illustrant deux variantes de réalisation ;
[Fig. 9A] est une vue en perspective, en accord avec une première variante de réalisation de l'invention, d'un moyen d'assemblage mâle (sans aimant ou élément ferromagnétique) destiné à être intégré dans une partie de paroi latérale constitutive de l'enveloppe isolante du dispositif de réservoir représenté figures 7 et 8, et les figures [Fig. 9B] et [Fig. 9C] sont des vues en élévation selon deux directions différentes du moyen représenté figure 9A ;
[Fig. 10A] est une vue en perspective, en accord avec une première variante de réalisation de l'invention, d'un moyen d'assemblage femelle (sans aimant ou élément ferromagnétique) destiné à être intégré dans une partie de paroi latérale constitutive de l'enveloppe isolante du dispositif de réservoir représenté figures 7 et 8, et les figures [Fig. 10B] et [Fig. 10C] sont des vues en élévation selon deux directions différentes du moyen représenté figure 10A ;

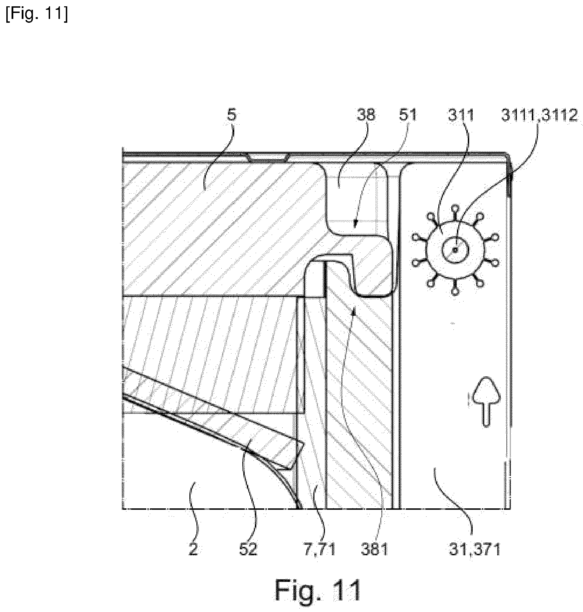

[Fig. 11] est une vue à une échelle différente du détail Y de la figure 5 ;

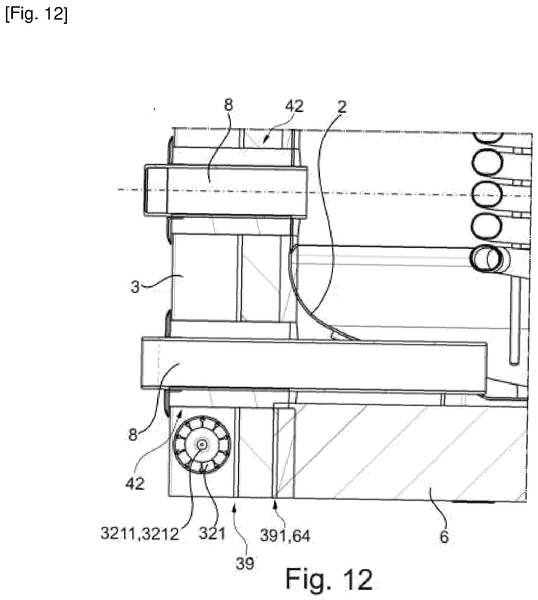

[Fig. 12] est une vue à une échelle différente du détail W de la figure 3 ;
[Fig. 13] est une vue à une échelle différente du détail Z de la figure 5, en accord avec la première variante de réalisation des moyens d'assemblage mâle et femelle représentés figures 9 et 10 et réalisant la liaison d'assemblage magnéto-mécanique entre parties de paroi latérale ;
[Fig. 14] est une vue de dessus d'un corps en forme de plaque, destiné à fermer l'ouverture inférieure de l'enveloppe isolante du dispositif de réservoir illustré figures 1 à 5, selon un premier mode de réalisation de l'invention ;
[Fig. 15A] et [Fig. 15B] sont des vues respectivement de dessus et en perspective d'un corps en forme de plaque, destiné à fermer l'ouverture inférieure de l'enveloppe isolante du dispositif de réservoir illustré figures 1 à 5, selon un second mode de réalisation de l'invention ;
[Fig. 16] est une vue de dessus d'une des trois parties constitutives identiques du corps en forme de plaque représenté figures 15 ;
[Fig. 17] est une vue à une échelle différente du détail Z de la figure 5, en accord avec une seconde variante de réalisation des moyens d'assemblage mâle et femelle réalisant la liaison d'assemblage magnéto-mécanique entre parties de paroi latérale, et,
[Fig. 18] est une vue éclatée de détail illustrant la mise en place d'un moyen d'assemblage mâle représenté figure 17 au niveau du bord d'assemblage d'une partie de paroi latérale.

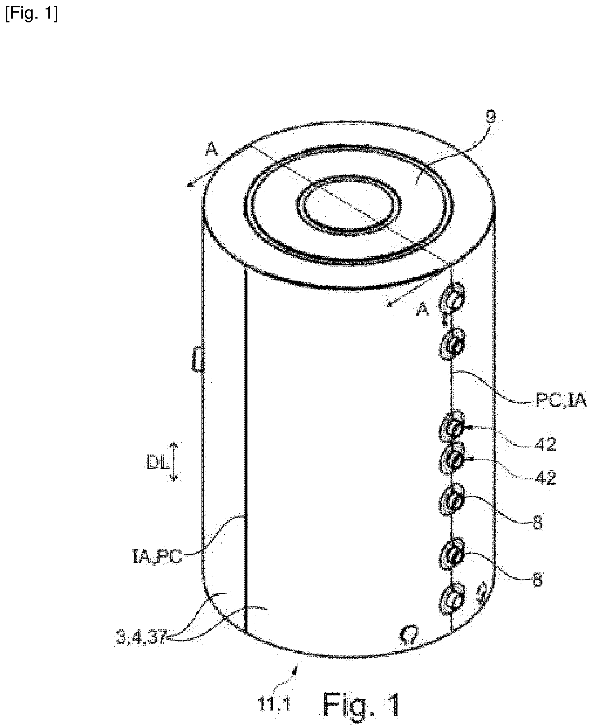

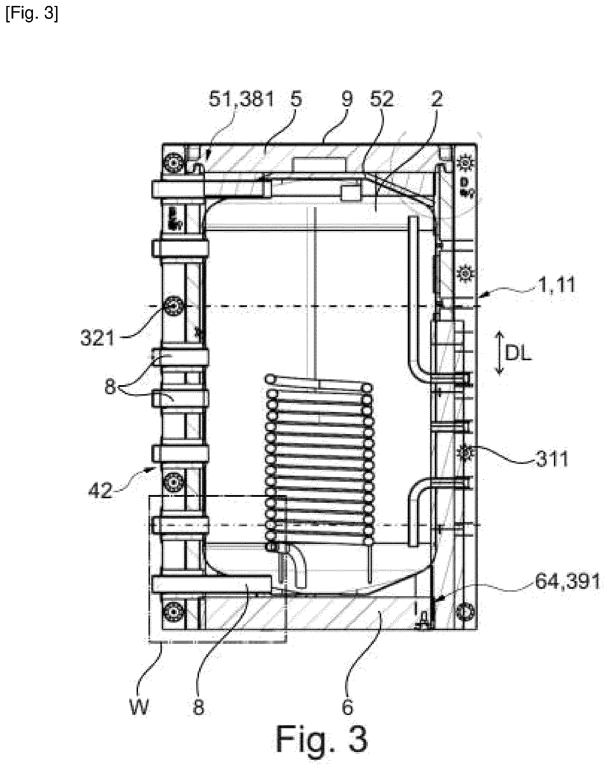

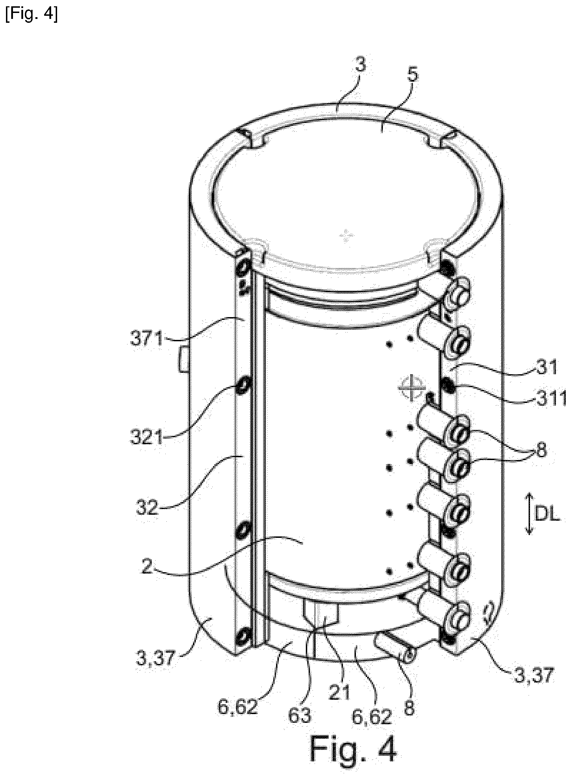

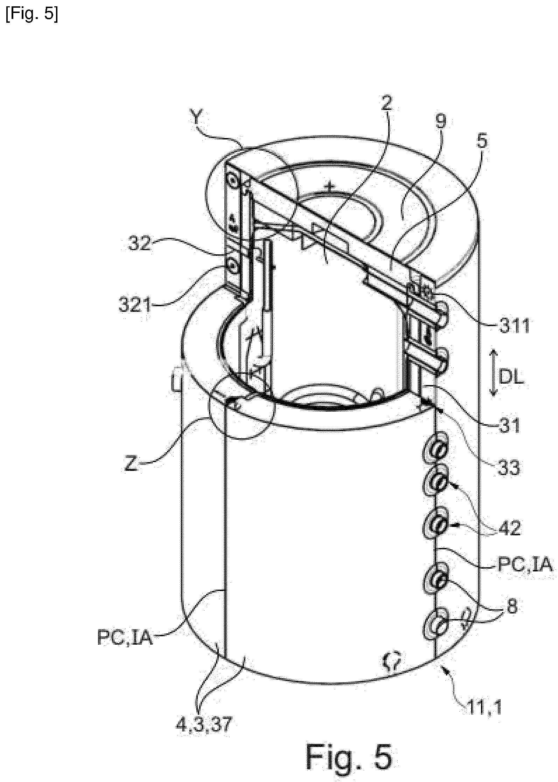

Les figures 1 à 5 illustrent une enveloppe isolante (1) en plusieurs parties pour réservoir (2), notamment pour réservoir de stockage d'eau. Cette enveloppe (1) comprend au moins deux parties de paroi latérales (3) complémentaires, assemblées entre elles par aboutement de leurs bords latéraux (31, 32) opposés pour former ensemble un corps cylindrique creux (4), à section ronde ou non, et, éventuellement au moins un corps (5, 6) en forme de plaque obturant l'une ou chacune des deux ouvertures opposées supérieure et inférieure dudit corps cylindrique (4). Les différentes parties (3) précitées constituent ensemble une coque isolante (11), éventuellement fermée par au moins l'un des deux corps (5, 6), destinée à entourer et enfermer ledit réservoir (2). Les bords d'assemblage (31, 32) latéraux des parties de paroi latérales (3) s'étendent selon la direction longitudinale (DL) du corps cylindrique (4).

Conformément à l'invention, chaque partie de paroi latérale (3) présente une structure composite avec un corps principal (34) en un matériau moussé ou alvéolaire rigide et pourvu d'au moins une cavité ou zone renfoncée (341) au niveau de la face intérieure (35) de la partie de paroi latérale (3) tournée vers le réservoir (2), et au moins un panneau isolant sous vide (36), s'étendant sur une portion de la surface de la partie de paroi latérale (3) concernée, est disposé dans ladite au moins une cavité ou zone renfoncée (341), préférentiellement de manière ajustée, ladite enveloppe isolante (1) comprenant également au moins une couche (7) de matériau compressible arrangée pour être située au moins entre les corps principaux (34) des parties de paroi latérale (3) et le réservoir (2).

Grâce à ces dispositions, et notamment à la présence de panneaux isolants sous vide (36), l'invention fournit une enveloppe isolante (1) pour réservoir dont les performances d'isolation thermique sont bien plus élevées que les enveloppes existantes, à épaisseurs égales. Du fait de leur intégration dans l'épaisseur du corps principal (34) et leur recouvrement côté intérieur par la couche (7) de matériau compressible, ces panneaux (36) relativement fragiles se retrouvent bien protégés. En outre, ladite au moins une couche (7) de matériau compressible, en remplissant l'espace entre le corps principal rigide et la face extérieure du réservoir (2) permet d'éviter tout phénomène de cheminée (circulation d'air par convection entre le réservoir et l'enveloppe).

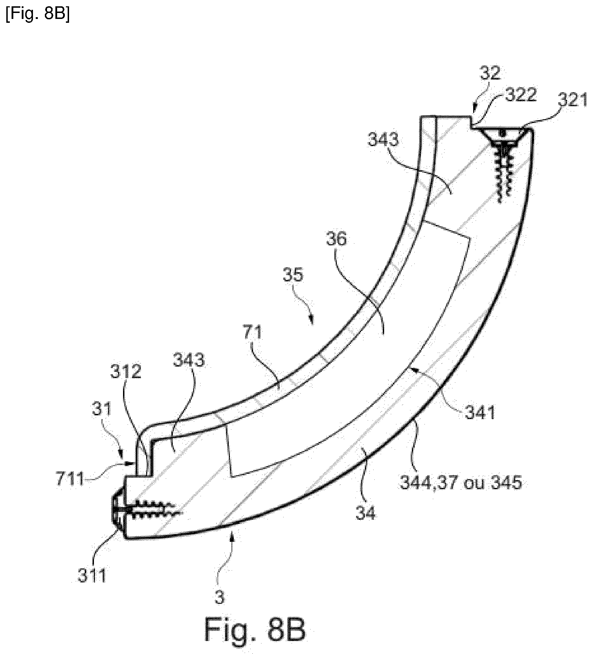

Comme le montre la figure 8B, le corps principal (34) consiste avantageusement en une plaque configurée pour loger ledit au moins un panneau isolant sous vide (36) et fournissant des bords d'assemblage (31, 32, 38, 39) périphériques à la partie de paroi latérale (3) considérée. Ces différents bords d'assemblage (31, 32, 38, 39) comprennent deux bords (31, 32) latéraux opposés pour l'assemblage entre parties de paroi latérale (3), un bord supérieur (38) pour l'assemblage avec le corps (5) en forme de plaque obturant l'ouverture supérieure du corps cylindrique (4) et un bord inférieur (39) pour l'assemblage avec le corps (6) en forme de plaque obturant l'ouverture inférieure du corps cylindrique (4). Lesdits bords d'assemblage (31, 32, 38, 39) sont associés à des rebords périphériques (343) respectifs au niveau de la face intérieure (35) du corps principal (34), qui délimitent entre eux la cavité ou zone renfoncée (341) logeant ledit au moins un panneau isolant sous vide (36).

La couche (7) est avantageusement au moins légèrement comprimée lorsque les parties de paroi latérales (3) sont assemblées entre elles, par aboutement de leurs bords latéraux (31, 32) opposés et établissement des liaisons d'assemblage (33) hybrides mécanique-magnétique, pour former ensemble le corps cylindrique creux (4). Ainsi, cette couche (7) permet non seulement d'empêcher une circulation d'air le long de l'extérieur du réservoir, mais également de compenser les jeux de fabrication et de montage et de s'assurer d'un contact souple sous pression entre le corps cylindrique creux (4) et le réservoir (2) avec une répartition surfacique et une adaptation de ladite pression. L'épaisseur de cette couche compressible (7), par exemple entre 10 mm et 30mm, préférentiellement de l'ordre de 20 mm (à l'état non comprimé), est déterminée de telle manière, en relation avec les diamètres respectifs de réservoir (2) et du corps cylindrique (4), que toutes les parties de paroi latérale (3) puissent être assemblées avec aboutement pour former ledit corps (4) tout en comprimant au moins partiellement ladite couche (7) entre ces parties (3) et la paroi du réservoir (2).

Selon une première variante de réalisation, la couche (7) de matériau souple compressible, par exemple un non-tissé de fibres synthétiques, située entre le corps principal (34) de chaque partie de paroi latérale (3) et le réservoir (2) consiste en une couche indépendante des parties de paroi latérales (3), formée d'un lé continu de matériau compressible enroulé sur au moins un tour, préférentiellement plusieurs tours, autour du réservoir (2).

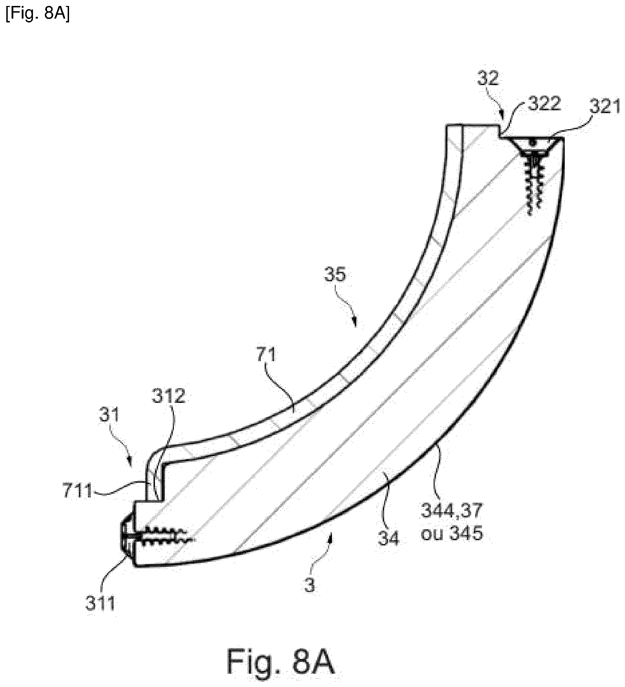

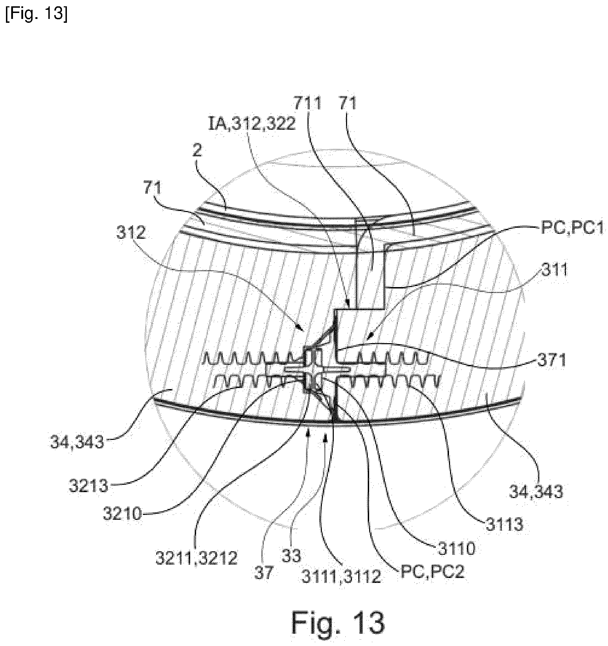

Selon une seconde variante de réalisation, ressortant des figures 8 notamment, chaque partie de paroi latérale (3) comprend un flanc (71) de matériau souple compressible rapportée sur sa face intérieure (35), par exemple un flanc (71) de matériau non-tissé de fibres synthétiques, ce flanc (71) recouvrant au moins ladite face intérieure (35) et le ou les panneau(x) isolant(s) sous vide (36) incorporé(s) dans la portion de paroi latérale (3) considérée, et une bande latérale dudit flanc (71) s'étendant avantageusement sur une partie de l'épaisseur d'au moins l'un des deux bords d'assemblage latéraux (31, 32) de la partie de paroi latérale (3) considérée, ces différents flancs (71) formant par juxtaposition aboutantes des parties de paroi latérales (3) qui les comportent, la couche (7) de matériau souple compressible. Ce flanc (71) s'étend avantageusement aussi partiellement, au niveau d'une bande latérale (711), sur une partie du chant d'un des bords latéraux d'assemblage (31, 32), comme le montrent les figures 8A et 8B, en étant alors comprimé lors de l'aboutement des deux parties de paroi latérale (3) concernées (voir figure 13).

Afin de renforcer mécaniquement l'assemblage par aboutement et favoriser l'isolation thermique dans le plan de contact (PC), les deux bords d'assemblage (31 et 32) latéraux opposés de chaque partie de paroi latérale (3) comportent des décrochements respectifs (312, 322) mutuellement complémentaires, formant lors de l'assemblage par aboutement de deux parties de paroi latérales (3) une interface d'assemblage (IA) qui est jointive surfaciquement, avec réalisation d'au moins une chicane profilée selon la direction longitudinale (DL) du corps cylindrique (4). On aboutit ainsi à au moins deux demi-plans de contact (PC1, PC2) à chaque interface d'assemblage (IA), à savoir un demi-plan intérieur (PC1) et au moins un demi-plan extérieur (PC2), décalés circonférentiellement et reliés entre eux par lesdits décrochements. Une telle construction permet d'assurer non seulement une liaison avec assujettissement mutuel dans la direction radiale par rapport à l'axe central du réservoir (2) parallèle la direction longitudinale (DL) entre les deux parois aboutantes (3) concernées, mais également une meilleure isolation thermique au niveau de l'interface de contact entre elles, surtout lorsque qu'une bande latérale (711) du flanc (71) de matériau souple compressible est en plus pincée au niveau du demi-plan intérieur (PC1), comme le montre la figure 13.

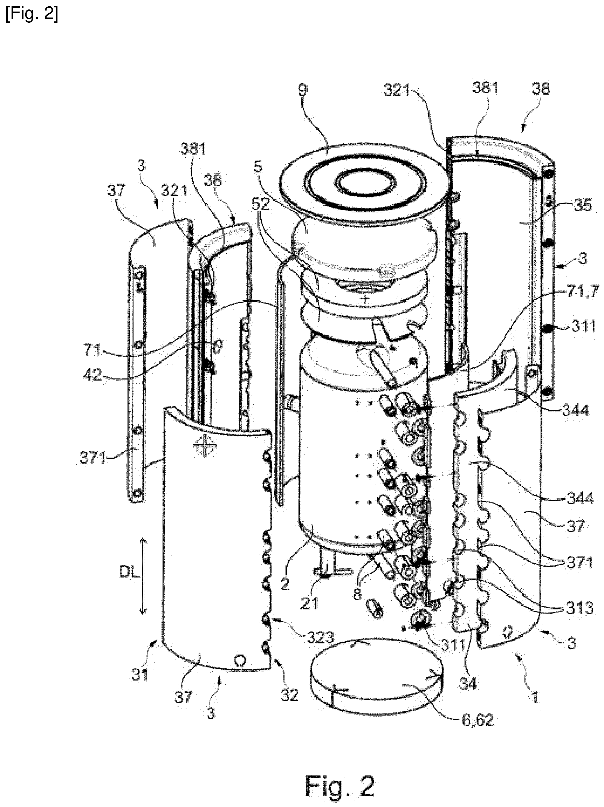

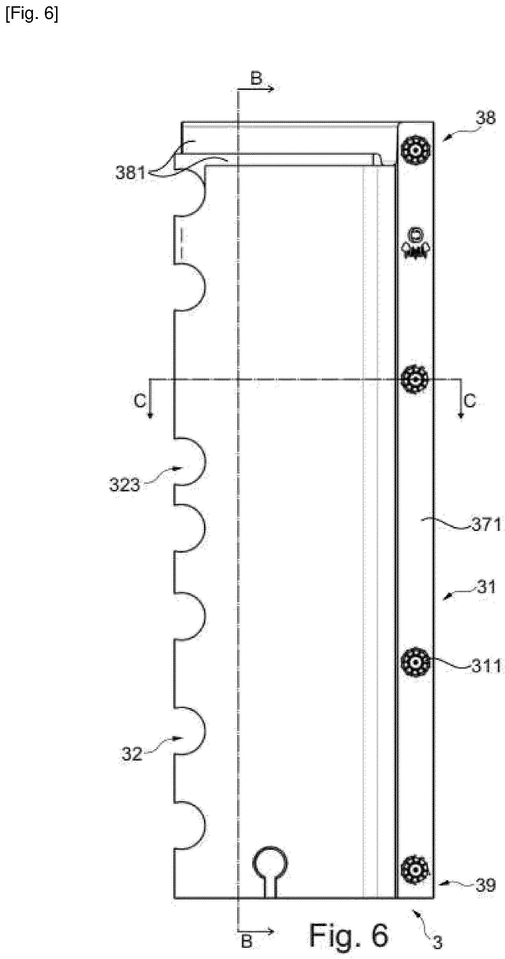

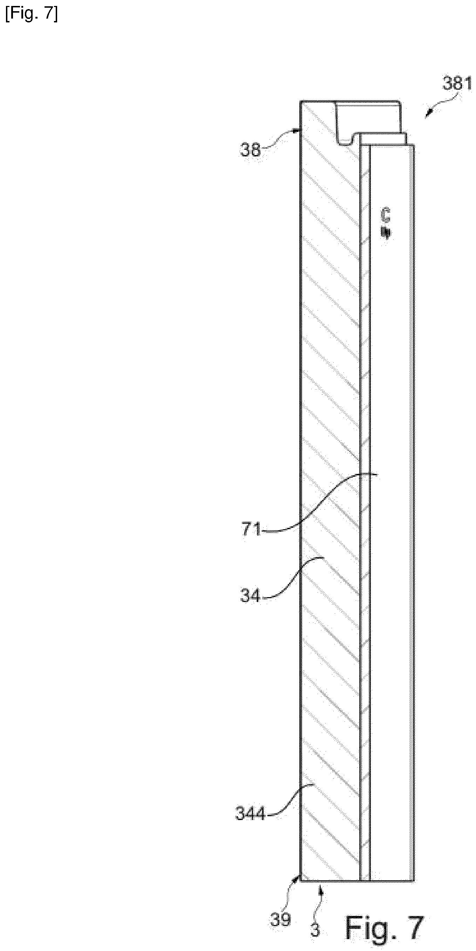

Conformément à une première variante de réalisation de l'aspect extérieur de l'enveloppe isolante (1), ressortant des figures 2, 6, 7 et 13, chaque partie de paroi latérale (3) comprend une paroi d'habillage (37) rapportée sur la face extérieure (344) de son corps principal (34) et solidarisée avec ce dernier au niveau des deux bords d'assemblage (31 et 32) latéraux opposés par des portions latérales pliées (371), ces dernières étant avantageusement pincées entre les bords d'assemblage (31 et 32) latéraux des parties de paroi latérales (3) aboutantes formant le corps cylindrique (4). Lorsque le plan de contact (PC) est formé de deux demi-plans de contact (PC1, PC2) reliés par un décrochement (312, 322), les portions latérales pliées (371) sont avantageusement maintenues par calage et préférentiellement aussi par pincement au niveau du second demi-plan extérieur (PC2), en plus d'une solidarisation éventuelle par les moyens d'assemblage (311, 312) montés par vissage.

La prévision d'une paroi d'habillage (37) sous forme de pièce rapportée et solidarisée de manière amovible avec le corps principal (34) permet non seulement une standardisation de la fabrication des parties de paroi latérale (3), mais également un grand choix dans les variantes esthétiques et une modification de l'aspect extérieur de la coque isolante (11) au cours du temps. Enfin, cette disposition facilite aussi le recyclage en fin de vie.

Les portions latérales pliées (371) présentent des découpes pour le passage des moyens d'assemblage (311, 321). Avantageusement, ces derniers assurent la solidarisation des portions latérales pliées (371) des parois d'habillage (37) avec les bords latéraux (31, 32) grâce à leurs formes en vis ou en clous à tête.

Conformément à une seconde variante de réalisation de l'aspect extérieur de l'enveloppe isolante (1), ressortant par exemple de la figure 8A, le corps principal (34) de chaque partie de paroi latérale (3) comporte au niveau de sa face extérieure (344) une peau (345), le cas échéant avec une surface traitée, formant paroi d'habillage (37) intégrée.

Dans les deux variantes, le corps cylindrique (4) est avantageusement constitué de deux à six parties de paroi latérales (3), préférentiellement de quatre.

Préférentiellement, afin de présenter la rigidité et l'isolation thermique souhaitées, le corps principal (34) des parties de paroi latérales (3), est formée d'un matériau moussé alvéolaire graphité, avantageusement du polystyrène ou du polyuréthane, avec une densité d'au moins 25 g/L. Il en est favorablement de même pour le corps (5) en forme de plaque obturant l'ouverture supérieure du corps cylindrique (4), lors que ce corps (5) est présent.

Le ou chaque panneau isolant sous vide (36) peut notamment consister en un panneau comprenant une enveloppe multicouche plastique/aluminium renfermant hermétiquement une poudre minérale du type silice en poudre. Cette enveloppe étant tiré sous vide, elle se transforme en un matelas rigide formable, par exemple en un panneau incurvé concave/convexe. Des panneaux de ce type sont notamment commercialisés par la société va-Q-tec.

Ces panneaux (36) sont logés dans des cavités correspondantes dans les corps principaux (34), moussés autour pour former les parties de paroi latérale (3) ou creusés de manière adaptée. Les panneaux (36) s'étendent avantageusement sur toute la hauteur du réservoir (2) autour de ce dernier et présentent par exemple une épaisseur comprise entre 15 et 30 mm, préférentiellement de l'ordre de 18 à 20 mm. Les corps principaux (34) peuvent quant à eux présenter une épaisseur de l'ordre de 100 à 120 mm, par exemple.

En vue de la réalisation d'une coque isolante (11) fermée au moins au niveau de l'ouverture supérieure du corps cylindrique (4), ledit corps (5) en forme de plaque est emboîté sur ou dans le corps cylindrique (4), au niveau de bords d'assemblage supérieurs (38) des parties de paroi latérales (3) qui le composent, et ledit corps (5) en forme de plaque comporte des formations périphériques (51) coopérant par engagement de formes conjuguées avec des formations (381) des bords d'assemblage supérieurs (38), par exemple des couples nervure/rainure inversées ou des décrochements complémentaires, pour réaliser une configuration de chicanes. Par ailleurs, au moins un flanc (52) de matériau souple compressible, par exemple un flanc (discoïdal) de matériau non-tissé de fibres synthétiques, est associé au corps (5) en forme de plaque, sur sa face intérieure tournée vers le réservoir (2), séparément ou non. Un couvercle d'habillage (9) peut éventuellement recouvrir extérieurement le corps (5), en étant par exemple de même nature que les parois d'habillage (37). Il peut également couvrir le cas échéant les bords supérieurs (38) des corps (34) des parties de parois latérale (3). Par ailleurs, une plaque (discoïdale) présentant la même constitution qu'un panneau isolant sous vide (36) peut éventuellement être intercalée entre le flanc (52) de matériau souple compressible et le corps (5) en forme de plaque.

Comme le montrent les figures 1 à 6, les bords d'assemblage latéraux (31 et 32) aboutants d'au moins deux parties de paroi latérales (3) comportent des découpes (313, 323) formant par coopération des ouvertures de passage (42) dans le corps cylindrique (4) pour des conduits ou des éléments tubulaires similaires (8), au moins l'une des parois latérales (3) étant éventuellement également pourvue d'au moins une telle ouverture de passage (42).

Le corps cylindrique (4) peut être soit constitué soit d'une seule rangée de parties de paroi latérales (3), soit d'au moins deux rangées de parties de paroi latérales (3), superposées dans la direction longitudinale (DL). Par conséquent, l'enveloppe isolante (1) peut être adaptée à des réservoirs de tailles variables dans la direction (DL), les parties de paroi latérales (3) superposées de deux rangées successives étant avantageusement imbriquées entre elles avec leurs bords respectivement supérieurs (38) et inférieurs (39).

Comme le montrent les figures 1 à 6, les bords d'assemblage latéraux (31 et 32) aboutants d'au moins deux parties de paroi latérales (3) comportent des découpes (313, 323) formant par coopération des ouvertures de passage (42) dans le corps cylindrique (4) pour des conduits ou des éléments tubulaires similaires (8), au moins l'une des parois latérales (3) étant éventuellement également pourvue d'au moins une telle ouverture de passage (42).

Le corps cylindrique (4) peut être soit constitué soit d'une seule rangée de parties de paroi latérales (3), soit d'au moins deux rangées de parties de paroi latérales (3), superposées dans la direction longitudinale (DL). Par conséquent, l'enveloppe isolante (1) peut être adaptée à des réservoirs de tailles variables dans la direction (DL), les parties de paroi latérales (3) superposées de deux rangées successives étant avantageusement imbriquées entre elles avec leurs bords respectivement supérieurs (38) et inférieurs (39).

Le corps cylindrique (4) peut bien entendu présenter des sections de formes variées, selon un plan perpendiculaire à sa direction longitudinale (DL), mais préférentiellement il présente une section circulaire. Dans ce dernier cas, chaque partie de paroi latérale (3) présentera une forme cintrée adaptée.

En accord avec un autre aspect de l'invention, ressortant des figures 2 à 8, 13 et 17 plus particulièrement, chaque bord d'assemblage (31, 32) d'une partie de paroi latérale (3) comporte au moins deux moyens d'assemblage (311 ou 321) à verrouillage magnétique coopérant respectivement avec au moins deux moyens d'assemblage (321 ou 311) à verrouillage magnétique complémentaires correspondants, présents sur le bord d'assemblage (32, 31) de l'autre ou d'une autre partie de paroi latérale (3) avec laquelle elle est assemblée avec aboutement bord à bord.

Grâce à ces dispositions additionnelles de l'invention, on aboutit à une construction de l'enveloppe isolante (1) aisée à monter sur le réservoir (2) et facilement démontable (partiellement, par exemple pour de la maintenance, ou totalement, pour le remplacement de l'enveloppe en vue de son recyclage final ou pour une modification d'aspect). De plus, ces opérations des montage/démontage peuvent être effectuées, sans mettre en œuvre de pièces séparées de fixation ou d'assemblage et sans nécessiter d'outil. En outre, l'invention permet de fournir une enveloppe isolante (1) en kit, prêt à être monter (le cas échéant sur le site d'installation) et dont le conditionnement peut être optimisé avec un nombre limité de pièces, à savoir pour le corps cylindrique creux (4) uniquement les parties de paroi latérale (3) avec leurs moyens d'assemblage (311, 321) à verrouillage magnétique intégrés.

De manière avantageuse, et comme le montrent les figures 8, il est prévu que les moyens d'assemblage (311, 321) à verrouillage magnétique soient de deux types différents et que chacun des deux bords d'assemblage (31 et 32) d'une partie de paroi latérale (3) comporte des moyens d'assemblage (311 ou 321) d'un seul des deux types. En singularisant chacun des deux bords d'assemblage latéral opposés (31 et 32) de chaque partie de paroi latérale (3), avec des moyens d'assemblage d'un type qui peuvent coopérer avec des moyens complémentaires coïncidents de l'autre type présents sur le bord venant en aboutement, le montage du corps cylindrique creux (4) est facilité et évite toute erreur d'assemblage.

Préférentiellement, chaque liaison d'assemblage (33) formée par coopération d'une paire de moyens d'assemblage (311 et 321) de types différents consiste en une liaison par engagement mécanique de formes conjuguées combinée à une liaison magnétique, laquelle verrouille avantageusement ledit engagement. Ainsi, chaque liaison d'assemblage (33) est une liaison double intégrant deux liaisons de natures différentes, la liaison magnétique assurant automatiquement le verrouillage de la liaison par engagement mécanique. L'assemblage entre deux parties de paroi latérales (3) est réalisé par l'intermédiaire d'au moins deux liaisons d'assemblage (33) précitées (de type magnétomécanique), avantageusement au moins trois, et préférentiellement au moins quatre, réparties le long des bords latéraux (31 et 32) aboutants.

Pour faciliter le montage, et notamment le guidage lors du mouvement d'approche final entre deux parties de paroi latérales (3) à abouter, chaque liaison d'assemblage (33) présente, par le biais de son engagement mécanique de formes conjuguées, une faculté d'autocentrage, favorisée au moins en fin d'engagement mutuel des deux moyens d'assemblage (311 et 321) concernés par l'action de la liaison magnétique. Ainsi, éventuellement déjà au cours, et notamment en fin, d'engagement réciproque des moyens d'assemblage (311 et 321), le mouvement d'assemblage sera accompagné et l'engagement final sollicité, puis verrouillé, par attraction magnétique.

Selon une caractéristique avantageuse de l'invention, ressortant de la figure 13 et des figures 8, chaque liaison par engagement mécanique bloque l'assemblage entre deux parties de paroi latérales (3) considérées dans le plan de contact (PC) de leurs bords d'assemblage (31 et 32) respectifs mutuellement aboutés et chaque liaison magnétique verrouille la liaison par engagement mécanique et bloque l'assemblage entre les deux parties de paroi latérales (3) considérées selon une direction perpendiculaire audit plan de contact (PC). Une telle réalisation des liaisons d'assemblage (33) combine l'obtention d'une grande rigidité structurelle du corps cylindrique (4) composite, avec néanmoins une possibilité de démontage et de remontage à effort maitrisé, répétable et non destructive.

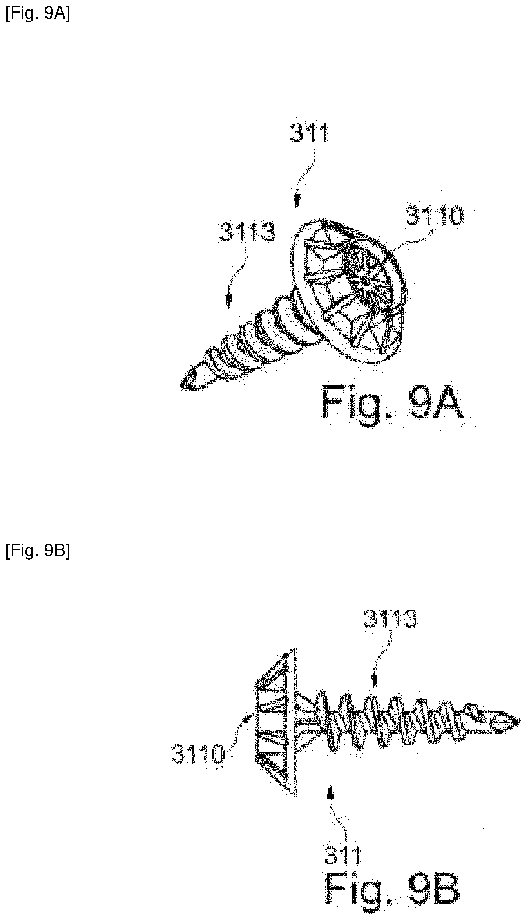

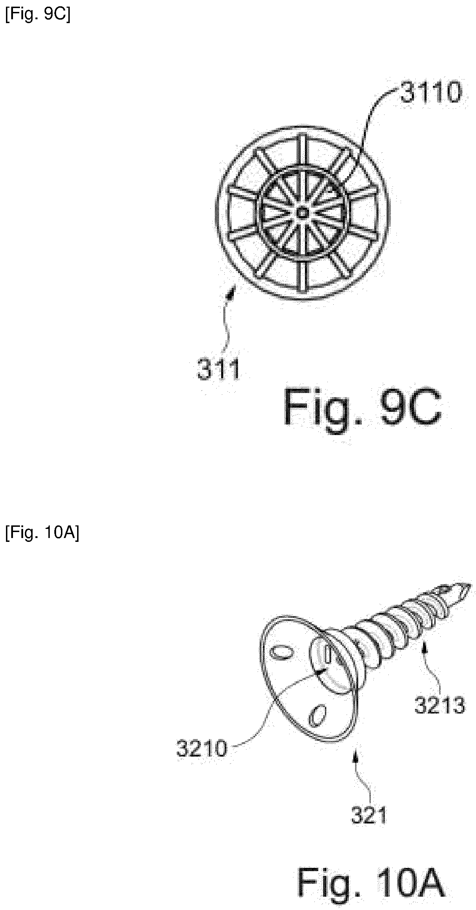

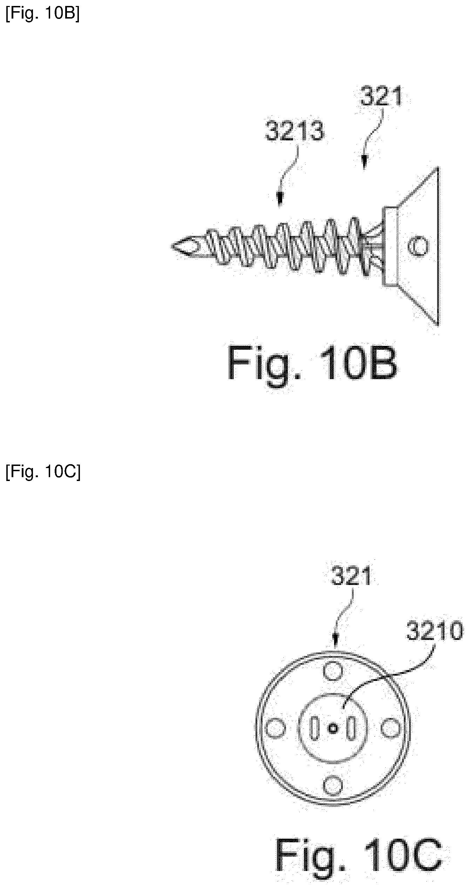

Comme cela ressort des figures 8 à 10,13 et 17, et en accord avec une réalisation favorable de l'invention, les moyens d'assemblage (311, 321) à verrouillage magnétique sont de deux types différents, un premier type (311) consistant en une pièce mâle rapportée, faisant saillie par rapport à la surface du bord d'assemblage (31) sur lequel elle est montée et comportant au moins un aimant (3111) ou élément ferromagnétique (3112), préférentiellement au niveau de son extrémité libre (3110), et un second type (321) consistant en une pièce femelle rapportée, de forme conjuguée par rapport à la forme de la pièce mâle (311), définissant un renfoncement par rapport à la surface du bord d'assemblage (32) sur lequel elle est montée et comportant au moins un aimant (3211) ou élément ferromagnétique (3212), préférentiellement au niveau de son fond (3110).

La force d'attraction magnétique au contact entre chaque couple aimant/élément ferromagnétique est préférentiellement supérieure à environ 20kg, par exemple de l'ordre de 25kg à 35kg (aimant en Néodyme).

Pour leur solidarisation avec les parties de paroi latérales (3), et en accord avec une première variante de réalisation illustrée notamment aux figures 8 à 10 et 13, chaque moyen d'assemblage (311, 321) à verrouillage magnétique peut comprendre un filet (3113, 3213) pour son montage par vissage dans le bord d'assemblage (31, 32) concerné. Chaque moyen d'assemblage (311, 321) se présente alors sensiblement sous la forme d'une vis à tête tronconique.

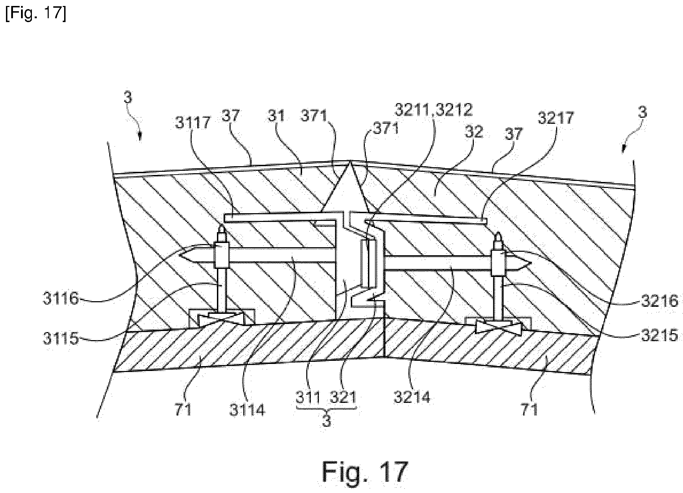

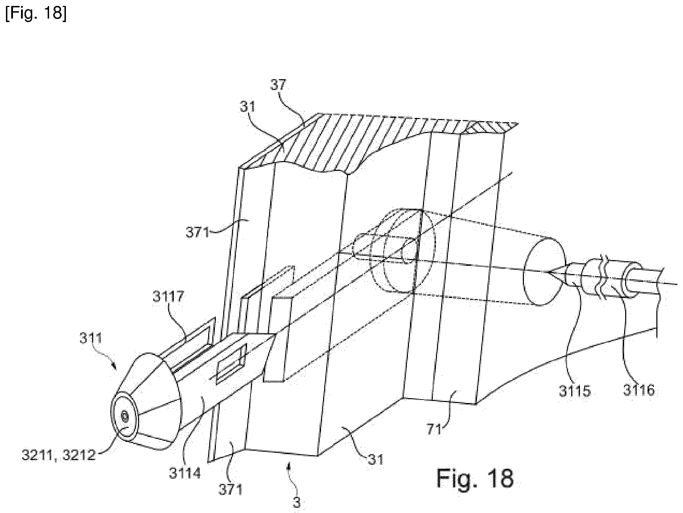

En accord avec une autre variante de réalisation de l'invention (voir figures 17 et 18), autorisant un démontage moins destructif, chaque moyen d'assemblage (311, 321) à verrouillage magnétique peut comprendre une broche d'ancrage (3114, 3214), verrouillable en position montée par un clou transversal (3115, 3215), préférentiellement à montage rotatoire et muni d'un excentrique (3116, 3216). Chaque moyen d'assemblage (311, 321) peut en outre comprendre une cheville de solidarisation (3117, 3217) accrochant la portion latérale pliée (371) de la paroi d'habillage (37) au bord latéral (31, 32) concerné. Comme le montrent les figures 17 et 18, le clou (3115, 3215) peut être pourvu d'un papillon pour faciliter sa rotation et le bord latéral (31, 32) et le flanc de couche de matériau compressible (71) comprennent un perçage pour la mise en place dudit clou de verrouillage (3115, 3215).Les figures 8 à 10,13 et 17 illustrent, en accord avec une réalisation pratique avantageuse de l'invention, que les moyens d'assemblage (311, 321) à verrouillage magnétique sont de deux types différents, un premier type (311) consistant en une pièce tronconique mâle, faisant saillie par rapport à la surface du bord d'assemblage (31) sur lequel elle est montée et comportant au moins un aimant (3111) ou élément ferromagnétique (3112), préférentiellement au niveau de son sommet (3110), et un second type (321) consistant en une pièce tronconique femelle, de forme complémentaire par rapport à la forme de la pièce mâle (311), définissant un renfoncement par rapport à la surface du bord d'assemblage (32) sur lequel elle est montée et comportant au moins un aimant (3211) ou élément ferromagnétique (3212), préférentiellement au niveau de son fond (3210), lesdits moyens d'assemblage (311, 321) présentant en outre soit un filet (3113, 3213), par exemple une partie formant vis, soit une broche d'ancrage (3114, 3214), verrouillable en position montée par un clou transversal (3115, 3215), pour leur montage dans le bord d'assemblage (31, 32) concerné.

En relation avec la première variante des figures 8 à 10 et 13, le bord (32) recevant la pièce femelle (321) est fraisé avant le vissage de cette dernière, en vue de réaliser une cavité pour recevoir cette pièce (321) avec affleurement.

Afin de pouvoir constituer une coque isolante (11) fermée et d'assurer une bonne isolation, combinée à des possibilités de montage et de démontage faciles malgré la présence des pieds (21) du réservoir (2), le corps (6) en forme de plaque obturant l'ouverture inférieure du corps cylindrique (4) consiste en un matériau moussé ou alvéolaire rigide, est pourvu d'ouvertures (61) pour le passage des pieds d'appui (21) du réservoir (2), avantageusement au moins trois, et est composé d'au moins deux parties constitutives (62) mutuellement complémentaires, la ou les lignes d'assemblage (63) entre parties constitutives (62) passant par lesdites ouvertures de passage (61).

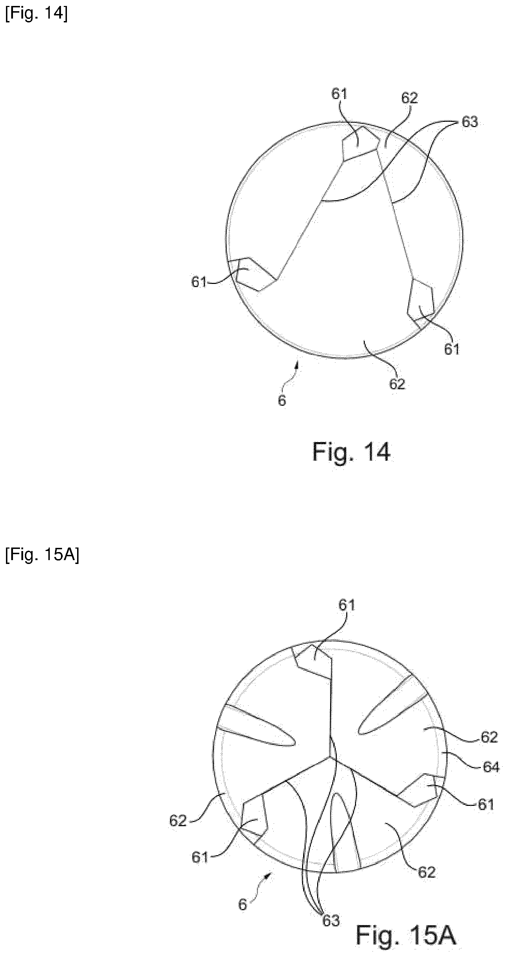

Comme le montre la figure 14, le corps (6) en forme de plaque peut être constitué de seulement deux parties constitutives (62), de forme différente, mais de manière préférée il est constitué de trois parties constitutives (62) identiques et comporte avantageusement trois ouvertures de passage (61), pour les trois pieds du réservoir.

La réalisation du corps (6) en forme de plaque en au moins deux parties constitutives comme décrit ci-dessus permet une mise en place de ce corps (6), ainsi qu'un démontage partiel ou total de ce dernier, alors que le réservoir (2) est en appui sur ses pieds (21). Cette mise en place doit normalement intervenir avant installation du corps cylindrique (4) autour du réservoir (2), mais peut aussi intervenir après un montage partiel dudit corps (par exemple après montage de trois parties de paroi latérale sur les quatre pouvant former ledit corps).

En vue d'aboutir à une isolation performante au niveau de la région inférieure du corps cylindrique (4) et d'aboutir à une coque isolante (11) fermée à ce niveau, le corps (6) en forme de plaque est emboîté périphériquement dans le corps cylindrique (4), au niveau de bords d'assemblage inférieurs (39) des parties de paroi latérales (3) qui le composent. A cet effet, ledit corps (6) en forme de plaque comporte des formations périphériques (64) coopérant par engagement de formes conjuguées avec des formations (391) des bords d'assemblage inférieurs (39), par exemple des couples nervure/rainure inversées ou des décrochements complémentaires, pour réaliser une configuration de chicanes, le cas échéant au moins un flanc de matériau souple compressible, par exemple un flanc de matériau non-tissé de fibres synthétiques, étant associé au corps (6) en forme de plaque, sur sa face intérieure tournée vers le réservoir (2), séparément ou non.

Avantageusement, le corps (6) en forme de plaque consiste également en un matériau moussé alvéolaire graphité, avantageusement du polystyrène ou du polyuréthane, avec une densité d'au moins 25g/L.

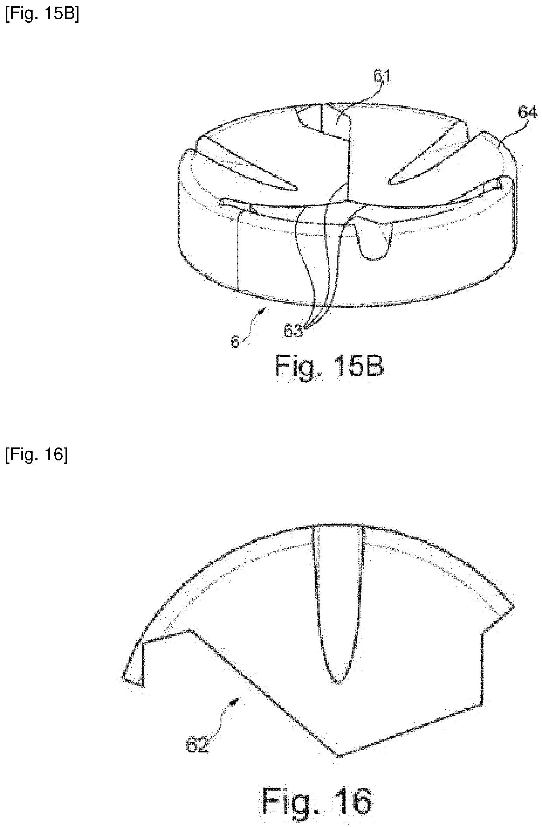

Comme le montrent les figures 15, le corps (6) en forme de plaque peut présenter, dans le cas d'un réservoir (2) à fond bombé, une forme concave complémentaire pour un contact surfacique et centré avec ce fond. De plus, des empreintes de gorges de passage de conduits (8) de raccordement peuvent être présentes.

En variante, le corps (6) en forme de plaque peut également être constitué d'un matériau souple du type fibreux, telle que par exemple un mat de fibres de polyester découpé à la forme et à la taille de l'ouverture inférieure, et être alors réalisé d'un seul tenant.

Avantageusement, les différentes parties de paroi latérale (3) précitées et les deux corps (5, 6) en forme de plaques constituent ensemble une enveloppe isolante (1) sous forme de kit prêt à monter.

L'invention concerne aussi un dispositif de réservoir isolé thermiquement comprenant un réservoir (2) pourvu d'une enveloppe isolante, caractérisé en ce que ladite enveloppe isolante est une enveloppe isolante telle que décrite ci-dessus.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Enveloppe isolante (1) en plusieurs parties pour réservoir (2), notamment pour réservoir de stockage d'eau, comprenant au moins deux parties de paroi latérales (3) complémentaires, assemblées entre elles par aboutement de leurs bords latéraux (31, 32) opposés pour former ensemble un corps cylindrique creux (4), à section ronde ou non, et, éventuellement au moins un corps (5, 6) en forme de plaque obturant l'une ou chacune des deux ouvertures opposées supérieure et inférieure dudit corps cylindrique (4), les différentes parties (3) précitées constituant ensemble une coque isolante (11), éventuellement fermée par au moins l'un des deux corps (5, 6), destinée à entourer et enfermer ledit réservoir (2), avec les bords d'assemblage (31, 32) latéraux des parties de paroi latérales (3) s'étendant selon la direction longitudinale (DL) du corps cylindrique (4),
enveloppe isolante (1) **caractérisée en ce que** chaque partie de paroi latérale (3) présente une structure composite avec un corps principal (34) en un matériau moussé ou alvéolaire rigide et pourvu d'au moins une cavité ou zone renfoncée (341) au niveau de la face intérieure (35) de la partie de paroi latérale (3) tournée vers le réservoir (2), et **en ce qu'**au moins un panneau isolant sous vide (36), s'étendant sur une portion de la surface de la partie de paroi latérale (3) concernée, est disposé dans ladite au moins une cavité ou zone renfoncée (341), préférentiellement de manière ajustée, ladite enveloppe isolante (1) comprenant également au moins une couche (7) de matériau compressible arrangée pour être située au moins entre les corps principaux (34) des parties de paroi latérale (3) et le réservoir (2).

2. Enveloppe isolante (1) selon la revendication 1, **caractérisée en ce que** le corps principal (34) consiste en une plaque configurée pour loger ledit au moins un panneau isolant sous vide (36) et fournissant des bords d'assemblage (31, 32, 38, 39) périphériques à la partie de paroi latérale (3) considérée, et **en ce que** ces bords d'assemblage (31, 32, 38, 39) comprennent deux bords (31, 32) latéraux opposés pour l'assemblage entre parties de paroi latérale (3), un bord supérieur (38) pour l'assemblage éventuel avec le corps (5) en forme de plaque obturant l'ouverture supérieure du corps cylindrique (4) et un bord inférieur (39) pour l'assemblage éventuel avec le corps (6) en forme de plaque obturant l'ouverture inférieure du corps cylindrique (4), lesdits bords d'assemblage (31, 32, 38, 39) étant associés à des rebords périphériques (343) respectifs au niveau de la face intérieure (35) du corps principal (34), qui délimitent entre eux la cavité ou zone renfoncée (341) logeant ledit au moins un panneau isolant sous vide (36).

3. Enveloppe isolante (1) selon la revendication 1 ou 2, **caractérisée en ce que** la couche (7) de matériau compressible et qui est souple, par exemple un matériau non-tissé de fibres synthétiques, située entre le corps principal (34) de chaque partie de paroi latérale (3) et le réservoir (2), consiste en une couche qui est indépendante des parties de paroi latérales (3), et est formée d'un lé continu de matériau compressible enroulé sur au moins un tour, préférentiellement plusieurs tours, autour du réservoir (2).

4. Enveloppe isolante (1) selon la revendication 1 ou 2, **caractérisée en ce que** chaque partie de paroi latérale (3) comprend un flanc (71) de matériau compressible qui est souple et rapportée sur sa face intérieure (35), par exemple un flanc (71) de matériau non-tissé de fibres synthétiques, et **en ce que** ce flanc (71) recouvre au moins ladite face intérieure (35) et le ou les panneau(x) isolant(s) sous vide (36) incorporé(s) dans la portion de paroi latérale (3) considérée, une bande latérale dudit flanc (71) s'étendant avantageusement sur une partie de l'épaisseur d'au moins l'un des deux bords d'assemblage latéraux (31, 32) de la partie de paroi latérale (3) considérée, ces différents flancs (71) formant par juxtaposition aboutante des parties de paroi latérales (3) qui les comportent, la couche (7) de matériau souple compressible.

5. Enveloppe isolante (1) selon l'une quelconque des revendications 1 à 4, **caractérisée en ce que** les deux bords d'assemblage (31 et 32) latéraux opposés de chaque partie de paroi latérale (3) comportent des décrochements respectifs (312, 322) mutuellement complémentaires, formant lors de l'assemblage par aboutement de deux parties de paroi latérales (3) une interface d'assemblage (IA) qui est jointive surfaciquement, avec réalisation d'au moins une chicane, profilée selon la direction longitudinale (DL) du corps cylindrique (4).

6. Enveloppe isolante (1) selon l'une quelconque des revendications 1 à 5, **caractérisée en ce que** chaque partie de paroi latérale (3) comprend une paroi d'habillage (37) rapportée sur la face extérieure (344) de son corps principal (34) et solidarisée avec ce dernier au niveau des deux bords d'assemblage (31 et 32) latéraux opposés par des portions latérales pliées (371), ces dernières étant avantageusement pincées entre les bords d'assemblage (31 et 32) latéraux des parties de paroi latérales (3) aboutantes formant le corps cylindrique (4), ou, **en ce que** le corps principal (34) de chaque partie de paroi latérale (3) comporte au niveau de sa face extérieure (344) une peau (345), le cas échéant avec une surface traitée, formant paroi d'habillage (37) intégrée, le corps cylindrique (4) étant avantageusement constitué de deux à six parties de paroi latérales (3), préférentiellement de quatre.

7. Enveloppe isolante (1) selon l'une quelconque des revendications 1 à 6, **caractérisée en ce que** le corps principal (34) est formé d'un matériau moussé alvéolaire graphité, avantageusement du polystyrène ou du polyuréthane, avec une densité d'au moins 25g/L.

8. Enveloppe isolante (1) selon l'une quelconque des revendications 1 à 7, **caractérisée en ce que** le corps (5) en forme de plaque obturant l'ouverture supérieure du corps cylindrique (4) consiste en un matériau moussé alvéolaire graphité, avantageusement du polystyrène ou du polyuréthane, avec une densité d'au moins 25g/L, **en ce que** ledit corps (5) en forme de plaque est emboîté sur ou dans le corps cylindrique (4), au niveau de bords d'assemblage supérieurs (38) des parties de paroi latérales (3) qui le composent, et **en ce que** ledit corps (5) en forme de plaque comporte des formations périphériques (51) coopérant par engagement de formes conjuguées avec des formations (381) des bords d'assemblage supérieurs (38), par exemple des couples nervure/rainure inversées ou des décrochements complémentaires, pour réaliser une configuration de chicanes, au moins un flanc (52) de matériau souple compressible, par exemple un flanc de matériau non-tissé de fibres synthétiques, étant associé au corps (5) en forme de plaque, sur sa face intérieure tournée vers le réservoir (2), séparément ou non.

9. Enveloppe isolante (1) selon l'une quelconque des revendications 1 à 8, **caractérisée en ce que** les bords d'assemblage latéraux (31 et 32) aboutants d'au moins deux parties de paroi latérales (3) comportent des découpes (313, 323) formant par coopération des ouvertures de passage (42) dans le corps cylindrique (4) pour des conduits ou des éléments tubulaires similaires (8), au moins l'une des parois latérales (3) étant éventuellement également pourvue d'une telle ouverture de passage (42).

10. Enveloppe isolante (1) selon l'une quelconque des revendications 1 à 9, **caractérisée en ce que** le corps cylindrique (4) est constitué d'au moins deux rangées de parties de paroi latérales (3), superposées dans la direction longitudinale (DL).

11. Enveloppe isolante (1) selon l'une quelconque des revendications 1 à 10, **caractérisée en ce que** le corps cylindrique (4) présente une section circulaire selon un plan perpendiculaire à sa direction longitudinale (DL).

12. Enveloppe isolante (1) selon la revendication 1 à 11, **caractérisée en ce que** chaque bord d'assemblage (31, 32) d'une partie de paroi latérale (3) comporte au moins deux moyens d'assemblage (311 ou 312) à verrouillage magnétique coopérant respectivement avec au moins deux moyens d'assemblage (312 ou 311) à verrouillage magnétique complémentaires correspondants, présents sur le bord d'assemblage (32, 31) de l'autre ou d'une autre partie de paroi latérale (3) avec laquelle elle est assemblée avec aboutement bord à bord.

13. Enveloppe isolante (1) selon la revendication 12, **caractérisée en ce que** les moyens d'assemblage (311, 312) à verrouillage magnétique sont de deux types différents, **en ce que** chacun des deux bords d'assemblage (31 et 32) d'une partie de paroi latérale (3) comporte des moyens d'assemblage (311 ou 321) d'un seul des deux types et **en ce que** chaque liaison d'assemblage (33) formée par coopération d'une paire de moyens d'assemblage (311 et 321) de types différents consiste en une liaison par engagement mécanique de formes conjuguées combinée à une liaison magnétique.

14. Enveloppe isolante (1) selon la revendication 13, **caractérisée en ce que** chaque liaison d'assemblage (33) présente, par le biais de son engagement mécanique de formes conjuguées, une faculté d'autocentrage, favorisée en fin d'engagement mutuel des deux moyens d'assemblage (311 et 321) par l'action de la liaison magnétique.

15. Enveloppe isolante (1) selon la revendication 13 ou 14, **caractérisée en ce que** chaque liaison par engagement mécanique bloque l'assemblage entre deux parties de paroi latérales (3) considérées dans le plan de contact (PC) de leurs bords d'assemblage (31 et 32) respectifs mutuellement aboutés et **en ce que** chaque liaison magnétique verrouille la liaison par engagement mécanique et bloque l'assemblage entre les deux parties de paroi latérales (3) considérées selon une direction perpendiculaire audit plan de contact (PC).

16. Enveloppe isolante (1) selon l'une quelconque des revendications 12 à 15, **caractérisée en ce que** les moyens d'assemblage (311, 321) à verrouillage magnétique sont de deux types différents, un premier type (311) consistant en une pièce mâle rapportée, faisant saillie par rapport à la surface du bord d'assemblage (31) sur lequel elle est montée et comportant au moins un aimant (3111) ou élément ferromagnétique (3112), préférentiellement au niveau de son extrémité libre (3110), et un second type (321) consistant en une pièce femelle rapportée, de forme conjuguée par rapport à la forme de la pièce mâle (311), définissant un renfoncement par rapport à la surface du bord d'assemblage (32) sur lequel elle est montée et comportant au moins un aimant (3211) ou élément ferromagnétique (3212), préférentiellement au niveau de son fond (3110).

17. Enveloppe isolante (1) selon la revendication 12 à 16, **caractérisée en ce que** chaque moyen d'assemblage (311, 321) à verrouillage magnétique comprend un filet (3113, 3213) pour son montage par vissage dans le bord d'assemblage (31, 32) concerné.

18. Enveloppe isolante (1) selon l'une quelconque des revendications 12 à 16, **caractérisée en ce que** chaque moyen d'assemblage (311, 321) à verrouillage magnétique comprend une broche d'ancrage (3114, 3214), verrouillable en position montée par un clou transversal (3115, 3215), préférentiellement à montage rotatoire et muni d'un excentrique (3116, 3216), chaque moyen d'assemblage (311, 321) comprenant le cas échéant une cheville de solidarisation (3117, 3217) accrochant la portion latérale pliée (371) de la paroi d'habillage (37) au bord latéral (31, 32) concerné.

19. Enveloppe isolante (1) selon l'une quelconque des revendications 12 à 18, **caractérisée en ce que** les moyens d'assemblage (311, 321) à verrouillage magnétique sont de deux types différents, un premier type (311) consistant en une pièce tronconique mâle, faisant saillie par rapport à la surface du bord d'assemblage (31) sur lequel elle est montée et comportant au moins un aimant (3111) ou élément ferromagnétique (3112), préférentiellement au niveau de son sommet (3110), et un second type (321) consistant en une pièce tronconique femelle, de forme complémentaire par rapport à la forme de la pièce mâle (311), définissant un renfoncement par rapport à la surface du bord d'assemblage (32) sur lequel elle est montée et comportant au moins un aimant (3211) ou élément ferromagnétique (3212), préférentiellement au niveau de son fond (3110), lesdits moyens d'assemblage (311, 321) présentant en outre soit un filet (3113, 3213), par exemple une partie formant vis, soit une broche d'ancrage (3114, 3214), verrouillable en position montée par un clou transversal (3115, 3215), pour leur montage dans le bord d'assemblage (31, 32) concerné.

20. Enveloppe isolante (1) selon l'une quelconque des revendications 1 à 19, **caractérisée en ce que** le corps (6) en forme de plaque obturant l'ouverture inférieure du corps cylindrique (4) consiste en un matériau moussé ou alvéolaire rigide, est pourvu d'ouvertures (61) pour le passage des pieds d'appui (21) du réservoir (2), avantageusement au moins trois, et est composé d'au moins deux parties constitutives (62) mutuellement complémentaires, la ou les lignes d'assemblage (63) entre parties constitutives (62) passant par lesdites ouvertures de passage (61).

21. Enveloppe isolante (1) selon la revendication 20, **caractérisée en ce que** le corps (6) en forme de plaque est constitué de trois parties constitutives (62) identiques et comporte avantageusement trois ouvertures de passage (61).

22. Enveloppe isolante (1) selon la revendication 20 ou 21, **caractérisée en ce que** le corps (6) en forme de plaque est emboîté périphériquement dans le corps cylindrique (4), au niveau de bords d'assemblage inférieurs (39) des parties de paroi latérales (3) qui le composent, et **en ce que** ledit corps (6) en forme de plaque comporte des formations périphériques (64) coopérant par engagement de formes conjuguées avec des formations (391) des bords d'assemblage inférieurs (39), par exemple des couples nervure/rainure inversées ou des décrochements complémentaires, pour réaliser une configuration de chicanes, le cas échéant au moins un flanc de matériau souple compressible, par exemple un flanc de matériau non-tissé de fibres synthétiques, étant associé au corps (6) en forme de plaque, sur sa face intérieure tournée vers le réservoir (2), séparément ou non.

23. Dispositif de réservoir isolé thermiquement comprenant un réservoir (2) pourvu d'une enveloppe isolante, **caractérisé en ce que** ladite enveloppe isolante est une enveloppe isolante (1) selon l'une quelconque des revendications 1 à 22.
